# EUROPÄISCHE PATENTANMELDUNG

(11) **EP 4 163 603 A1**
(43) Veröffentlichungstag der Anmeldung: **12.04.2023**
(21) Anmeldenummer: 22197106.2
(22) Anmeldetag: 22.09.2022
(51) Int. Cl.: G01F 11/36, G01F 11/40

(54) **DOSIEREINRICHTUNG FÜR SCHÜTTGÜTER**

(30) Priorität: 05.10.2021 DE 102021005028
(71) Anmelder: Motan Holding GmbH, 78467 Konstanz (DE)
(72) Erfinder: Müller, Gerold, 88316 Isny (DE); Steinke, Andreas, 88239 Wangen im Allgäu (DE)
(74) Vertreter: Kohl, Karl-Heinz

(57) **Zusammenfassung**

Die Dosiereinrichtung hat wenigstens einen Dosierbehälter, der mit wenigstens einer Auslassöffnung (3) versehen ist. Sie ist durch einen Schieber (12) verschließbar, der mit einem Schieberantrieb, verbunden ist. Die Auslassöffnung (3) und/oder der Schieber (12) weisen einen schräg zur Verschieberichtung des Schiebers (12) verlaufenden Rand (7) auf. Die Ränder (7) der Auslassöffnung (3) und des Schiebers (12) bestimmen in Abhängigkeit vom Verschiebeweg des Schiebers (12) den wegabhängigen Auslassquerschnitt der Auslassöffnung (3).

## Beschreibung

Die Erfindung betrifft eine Dosiereinrichtung für Schüttgüter nach dem Oberbegriff des Anspruches 1.

Dosiervorrichtungen werden insbesondere in der Kunststoffindustrie eingesetzt und dienen dazu, die für die Kunststofferzeugnisse eingesetzten Schüttgüter in genau dosierten Mengen einer Bearbeitungsmaschine zuzuführen. Die Schüttgüter sind in einem Dosierbehälter gelagert, aus dem die Schüttgüter dosiert durch eine Auslassöffnung austreten. Sie kann durch einen Schieber verschlossen werden, der mittels eines Schieberantriebes aus einer Schließstellung in eine Offenstellung verschoben werden kann. Als Schieber sind beispielsweise Stößel bekannt, die in die Auslassöffnung eingefahren werden können, um sie zu schließen. Der Durchmesser des Stößels und der Auslassöffnung beschränken das zu dosierende Medium auf einen bestimmten Durchsatzbereich, der durch Geometrien des Stößels und der Auslassöffnung vorgegeben ist. Möchte der Anwender sein Rezept nach einer gewissen Zeit ändern und muss er dazu den vorgegebenen Dosierbereich verlassen, muss er die Dosiereinrichtung, falls überhaupt möglich, umbauen. Daher ist der Dosierbereich der bekannten Dosiereinrichtungen relativ klein und nicht sehr variabel.

Der Erfindung liegt die Aufgabe zugrunde, die gattungsgemäße Dosiereinrichtung so auszubilden, dass bei einfacher konstruktiver Ausbildung die Dosierrate einfach an das jeweils zu dosierende Schüttgut und die Menge angepasst werden kann.

Diese Aufgabe wird bei der gattungsgemäßen Dosiereinrichtung erfindungsgemäß mit den kennzeichnenden Merkmalen des Anspruches 1 gelöst.

Bei der erfindungsgemäßen Dosiereinrichtung ist vorgesehen, dass die Auslassöffnung von zwei einander gegenüberliegenden Rändern begrenzt ist, von denen der eine Rand am Schieber vorgesehen ist. In der Schließstellung verstellt der Schieber die Auslassöffnung vollständig. Ausgehend von dieser Schließstellung gelangt der Rand des Schiebers in den Bereich der Auslassöffnung. Sobald der Schieberrand über den benachbarten Rand der Auslassöffnung hinaus verschoben wird, ergibt sich je nach Stellung des Schiebers ein Auslassquerschnitt der Auslassöffnung, durch den das Schüttgut aus dem Dosierbehälter nach außen gelangen kann.

Da der entsprechende Rand der Auslassöffnung und/oder des Schiebers schräg zur Verschieberichtung des Schiebers verlaufen, wird der Auslassquerschnitt der Auslassöffnung nach und nach vergrößert, in Abhängigkeit vom Verschiebeweg des Schiebers. Auf diese Weise kann die Dosierrate an das jeweilige Schüttgut optimal angepasst werden. Durch den vom Schiebeweg des Schiebers abhängigen Auslassquerschnitt der Auslassöffnung lassen sich flexible Dosiermengen problemlos einstellen.

Da der Schieber vorteilhaft stufenlos in unterschiedlichste Positionen zwischen der Schließstellung und der maximalen Öffnungsstellung verschoben werden kann, ist eine genaue Dosierung, auch für kleine Schüttgutdurchsätze, gewährleistet.

Der entsprechende Rand der Auslassöffnung und/oder des Schiebers kann gerade, aber beispielsweise auch gekrümmt verlaufen. Durch die Schräglage in Bezug auf die Verschieberichtung des Schiebers wird auch in solchen Fällen erreicht, dass der Auslassquerschnitt der Auslassöffnung sich in Abhängigkeit vom Verschiebeweg des Schiebers ändert.

Bei einer vorteilhaften Ausbildung ist der Rand der Auslassöffnung v-förmig ausgebildet. Durch diese Gestaltung lassen sich sehr kleine Auslassquerschnitte einstellen, durch die das Schüttgut einwandfrei aus dem Dosierbehälter nach außen gelangen kann.

Vorteilhaft ist es, wenn der Rand des Schiebers v-förmig ausgebildet ist. Auch dadurch lassen sich sehr kleine Auslassquerschnitte einstellen.

Bei der v-förmigen Gestaltung des Randes der Auslassöffnung oder des Schiebers kann der jeweils andere Rand gerade oder auch gekrümmt verlaufend ausgebildet sein.

Vorteilhaft ist es, wenn der Rand der Auslassöffnung und der Rand des Schiebers jeweils v-förmig gestaltet sind. In diesem Falle sind die beiden Ränder so zueinander vorgesehen, dass sich der Rand der Auslassöffnung in die eine Verschieberichtung und der Rand des Schiebers in die andere Verschieberichtung des Schiebers erstrecken.

Besonders vorteilhaft ist es, wenn der Rand des Schiebers spiegelsymmetrisch zum Rand der Auslassöffnung ausgebildet ist. Dies hat zur Folge, dass der Auslassquerschnitt unabhängig von der Stellung des Schiebers stets viereckigen Umriss hat. Je weiter der Schieber von der Schließstellung aus verschoben ist, desto größer wird die in Verschieberichtung gemessene Höhe des jeweiligen Auslassquerschnittes.

Um die hohe Genauigkeit und optimale Anpassung der Dosierrate auch bei konstruktiv einfacher Gestaltung der Dosiereinrichtung zu erreichen, ist die Auslassöffnung an einer Behälterwand und/oder an einer Halteplatte vorgesehen, die am Dosierbehälter befestigt ist.

Vorteilhaft ist hierbei, wenn der Schieber an der Behälterwand oder an der Halteplatte anliegend verschiebbar ist. Dadurch kann der Schieber zuverlässig in die gewünschte Position verschoben werden, was zur guten Anpassung der Dosierrate beiträgt.

Eine weitere Verbesserung wird erreicht, wenn der Schieber durch wenigstens ein Führungselement, vorzugsweise eine Führungsplatte, bei seiner Verschiebebewegung geführt wird.

Das Führungselement ist an der Behälterwand oder an der Halteplatte befestigt, was zu einem konstruktiv einfachen Aufbau der Dosiereinrichtung beiträgt.

Das Führungselement kann nicht nur zur Führung des Schiebers dienen, sondern in vorteilhafter Weise zur Lagerung des Schieberantriebes vorgesehen sein. Eine solche Ausbildung trägt in vorteilhafter Weise zur einfachen Gestaltung der Dosiereinrichtung bei.

Es besteht aber auch die Möglichkeit, den Schieberantrieb an der Behälterwand zu lagern.

Damit der Schieber einfach mit dem Schieberantrieb gekoppelt werden kann, ist der Schieber mit wenigstens einem von ihm abstehenden Anschlussteil versehen, mit dem der Schieber mit dem Schieberantrieb antriebsverbunden ist. Das Anschlussteil kann beispielsweise eine vom Schieber quer abstehende Lasche sein, die einfach am Schieber vorgesehen werden kann und einen einfachen Anschluss an den Schieberantrieb gewährleistet.

Der den jeweiligen Auslassquerschnitt der Auslassöffnung begrenzende Rand des Schiebers ist dessen unterer Rand, bezogen auf die Schließstellung des Schiebers. Dadurch lässt sich der Schieber einfach fertigen, indem lediglich der untere Rand des Schiebers entsprechend ausgebildet wird.

Infolge der erfindungsgemäßen Ausbildung der Dosiereinrichtung wird der Schüttgutstrom der Dosierung durch den Verschiebeweg des Schiebers und der Schiebergeometrie und/oder der Geometrie der Auslassöffnung bestimmt. Durch Verschieben des Schiebers kann der Öffnungsrand bzw. der Auslassquerschnitt variabel eingestellt werden. Mit der erfindungsgemäßen Dosiereinrichtung ist eine Grob- und Feinstromdosierung möglich, d.h. es sind große und kleine Dosiermengen mit ein und derselben Dosierung möglich.

Der Schieberantrieb ist bei einer vorteilhaften Ausführungsform an eine Steuerung angeschlossen, mit der die Verschiebegeschwindigkeit des Schiebers steuerbar ist. Auf diese Weise können variable Öffnungsgeschwindigkeiten beim Aus- und Einfahren des Schiebers erreicht werden. Um die Position des Schiebers zuverlässig und dennoch einfach zu ermitteln, ist in vorteilhafter Weise ein Wegmesssystem vorgesehen, das den Verschiebeweg des Schiebers erfasst und an die Steuerung angeschlossen ist.

Das Wegmesssystem kann so ausgebildet sein, dass es den Verschiebeweg des Schiebers direkt erfasst. Hierfür können beispielsweise entsprechende Messsensoren eingesetzt werden, die die jeweilige Position des Schiebers erfassen und entsprechende Signale an die Steuerung senden.

Der Verschiebeweg des Schiebers kann aber auch indirekt durch das Wegmesssystem erfasst werden. In diesem Falle werden Daten des Schieberantriebes erfasst und ausgewertet. So kann beispielsweise der Schieberantrieb eine Gewindespindel aufweisen, wobei die Drehung der Gewindespindel erfasst und daraus die Position des Schiebers ermittelt wird.

Bei einer besonders vorteilhaften Ausbildung wertet die Steuerung Standardabweichungen der Dosierkonstanz aus und berechnet diese. Anhand der Berechnung unter Berücksichtigung des Schüttgutstromes, des Auslassquerschnittes der Auslassöffnung und der Dosierzeit ermittelt dann die Steuerung die optimale Schieberposition. Auf diese Weise wird eine maximale Dosiergenauigkeit erreicht.

Von Vorteil ist es, wenn die Steuerung intelligent ausgebildet ist und Algorithmen zur Selbstadaption und -optimierung des Dosierprozesses mit unterschiedlichen Schüttgütern enthalten kann.

Besonders vorteilhaft ist, wenn in der Steuerung Fließeigenschaften des jeweiligen Schüttgutes gespeichert werden. Dann kann bei der Einstellung des Schiebers die Steuerung auch die ermittelten und gespeicherten Fließeigenschaften des jeweiligen Schüttgutes berücksichtigen. Insbesondere kann auf diese Weise die schüttgutspezifische Dosierrate automatisch ermittelt werden.

Mit Hilfe der Steuerung ist es möglich, den idealen Auslassquerschnitt zu berechnen, bezogen auf die maximale Dosiergenauigkeit und eine minimale Dosierzeit.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird nachstehend anhand einiger in den Zeichnungen dargestellter Ausführungsformen näher erläutert. Es zeigen
- Fig. 1: in perspektivischer Darstellung eine erfindungsgemäße Dosiereinrichtung,
- Fig. 2: in Explosivdarstellung ein Dosierorgan der erfindungsgemäßen Dosiereinrichtung,
- Fig. 3: in perspektivischer Darstellung das Dosierorgan mit großer Auslassöffnung,
- Fig. 4: in perspektivischer Darstellung das Dosierorgan mit kleiner Auslassöffnung,
- Fig. 5: in schematischer Darstellung verschiedene Gestaltungen des Randes der Auslassöffnung des Dosierorgans.

Die Dosiereinrichtung hat einen Dosierbehälter 1, in denen sich die zu dosierenden Materialien (Schüttgut) befinden.

Der Dosierbehälter hat einen geneigt verlaufenden Boden 2, mit dessen Hilfe die Materialen nach unten zu einer Auslassöffnung 3 rutschen können.

Die Auslassöffnung 3 ist an einem Dosierorgan 4 vorgesehen, das an einer Seitenwand 5, im Ausführungsbeispiel der Rückwand, des Dosierbehälters 1 angeordnet ist. Über die Auslassöffnung 3 gelangt das dosierte Material nach unten in einen (nicht dargestellten) Aufnahmebehälter, in dem eine Mischeinrichtung vorgesehen sein kann. Der Aufnahmebehälter befindet sich vorteilhaft oberhalb einer Verarbeitungsmaschine, mit der die Materialien in bekannter Weise verarbeitet werden.

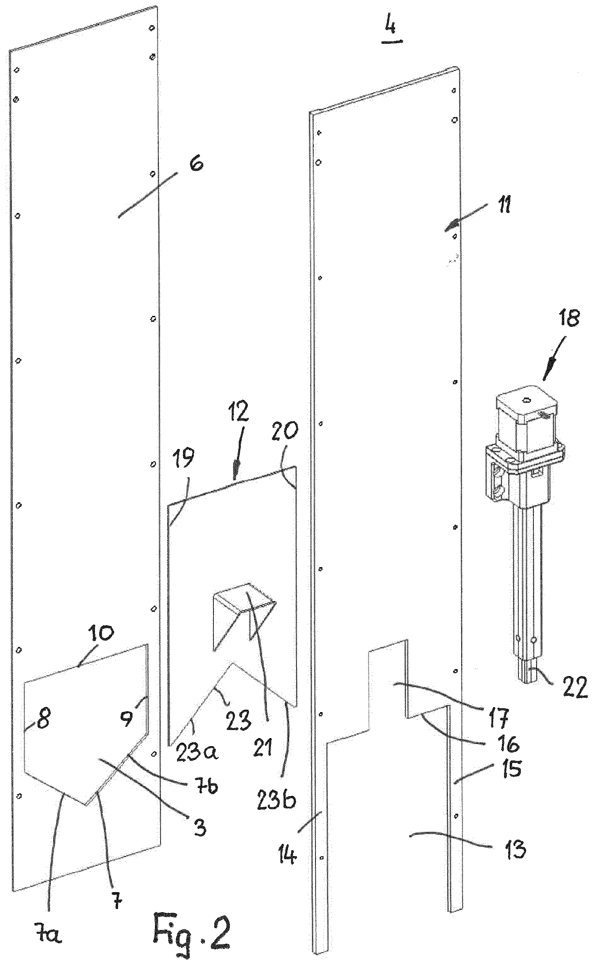

Das Dosierorgan 4 hat eine Halteplatte 6 (Fig. 2), die im Ausführungsbeispiel Rechteckform hat, je nach Gestaltung des Dosierbehälters 1 auch jede andere geeignete Form haben kann.

Die Halteplatte 6 wird im Ausführungsbeispiel vertikal ausgerichtet am Dosierbehälter 1 befestigt. Am unteren Ende ist die Halteplatte 6 mit der Auslassöffnung 3 versehen, deren unterer Rand 7 schräg verlaufend ausgebildet ist, bezogen auf die Längsrichtung der Halteplatte 6.

Die Angaben "unten" und "oben" beziehen sich auf die Lage in den Zeichnungen.

Der Rand 7 ist vorteilhaft v-förmig ausgebildet und symmetrisch zur Längsmittelachse der Halteplatte 6 gestaltet.

An den Rand 7 schließen in Längsrichtung der Halteplatte 6 verlaufende Seitenränder 8 und 9 an, die am oberen Ende durch einen Querrand 10 verbunden sind.

Auf der Halteplatte 6 ist ein Führungselement 11 befestigt, das vorteilhaft gleiche Umrissform wie die Halteplatte 6 hat und bevorzugt eine Führungsplatte ist, die nur wenig Bauraum benötigt und ein einfaches, kostengünstiges Bauteil ist.

Die Führungsplatte 11 dient zur Führung eines Schiebers 12, der zwischen der Halteplatte 6 und der Führungsplatte 11 angeordnet ist. Mit dem Schieber 12 wird der Durchlassquerschnitt der Auslassöffnung 3 in noch zu beschreibender Weise eingestellt.

Die Führungsplatte 11 ist im unteren Bereich mit einem Ausschnitt 13 versehen, der nach unten offen ist und an den Seiten durch schmale Leisten 14, 15 begrenzt ist.

Der Ausschnitt 13 wird nach oben von einem senkrecht zu den beiden Leisten 14, 15 verlaufenden Rand 16 begrenzt, in den in halber Länge ein schmaler Ausschnitt 17 mündet, der in Längsrichtung der Führungsplatte 11 wesentlich kürzer ist als der Ausschnitt 13.

Die Führungsplatte 11 wird unter Zwischenlage des Schiebers 12 an der Halteplatte 6 befestigt. Der Schieber 12 befindet sich im Bereich des Ausschnittes 13 der Führungsplatte 11.

An der von der Halteplatte 6 abgewandten Seite ist auf der Führungsplatte 11 ein Antrieb 18 angeordnet, mit dem der Schieber 12 stufenlos in Längsrichtung der Führungsplatte 11 bzw. des Dosierorganes 4 verschoben werden kann. Der Antrieb 18 ist ein Linearantrieb, vorzugsweise ein Stirnradgetriebemotor, mit dem der Schieber 12 zur Einstellung des Auslassquerschnittes der Auslassöffnung 3 stufenlos in Längsrichtung der Führungsplatte 11 verschoben werden kann.

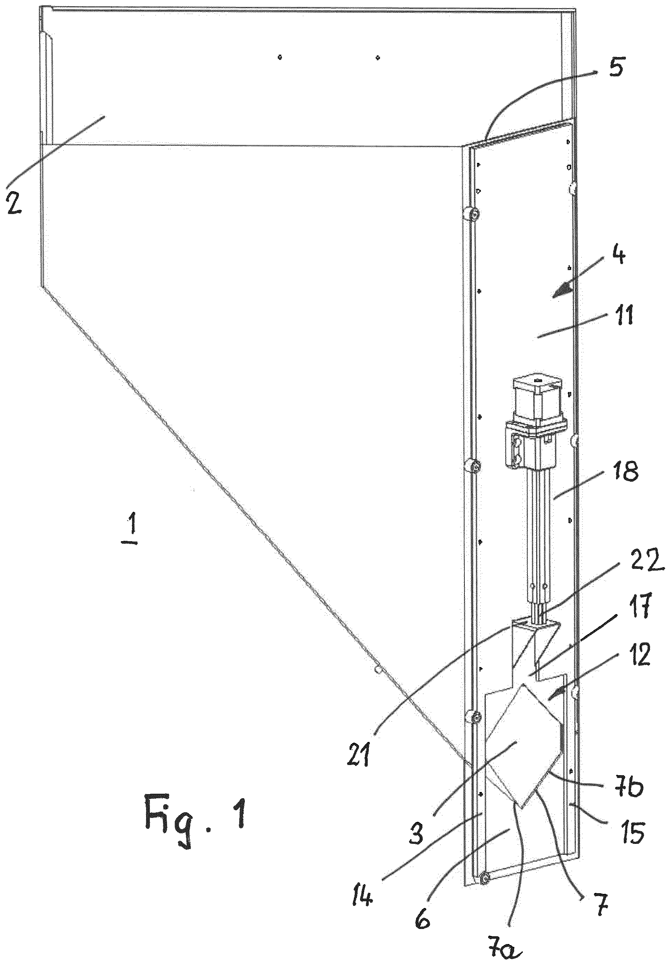

Der Schieber 12 ist ebenfalls plattenförmig ausgebildet und hat rechteckigen Umriss. Die Längsränder 19, 20 des Schiebers 12 werden von den Führungsleisten 14, 15 der Führungsplatte 11 übergriffen (Fig. 1 und2).

Der Schieber 12 weist eine Lasche 21 auf, die je nach Stellung des Schiebers 12 in den Ausschnitt 13 oder in den Ausschnitt 17 der Führungsplatte 11 ragt. An der quer abstehenden Lasche 21 ist das untere Ende einer Antriebsstange 22 des Antriebes 18 befestigt. Sie wird zum Verstellen des Schiebers 12 in ihrer Längsrichtung verschoben.

Der untere Rand 23 des Schiebers 12 ist im Ausführungsbeispiel v-förmig ausgebildet. Die beiden Randabschnitte 23a, 23b liegen beispielhaft unter 90° zueinander. In gleicher Weise liegen auch die Randabschnitte 7a, 7b des Randes 7 der Auslassöffnung 3 rechtwinklig zueinander. Die Ränder 7, 23 der Auslassöffnung 3 des Schiebers 12 sind entgegengesetzt zueinander gerichtet (Fig. 2 bis 4). Vorteilhaft haben die Ränder 7, 23 gleiche Abmessungen.

Die Randabschnitte 7a, 7b; 23a, 23b können auch unter anderen Winkeln zueinander liegen.

Mit dem Antrieb 18 kann der Schieber 12 so weit nach unten verschoben werden, dass die Auslassöffnung 3 der Halteplatte 6 vollständig geschlossen ist. Die Antriebsstange 22 ist entsprechend weit ausgefahren.

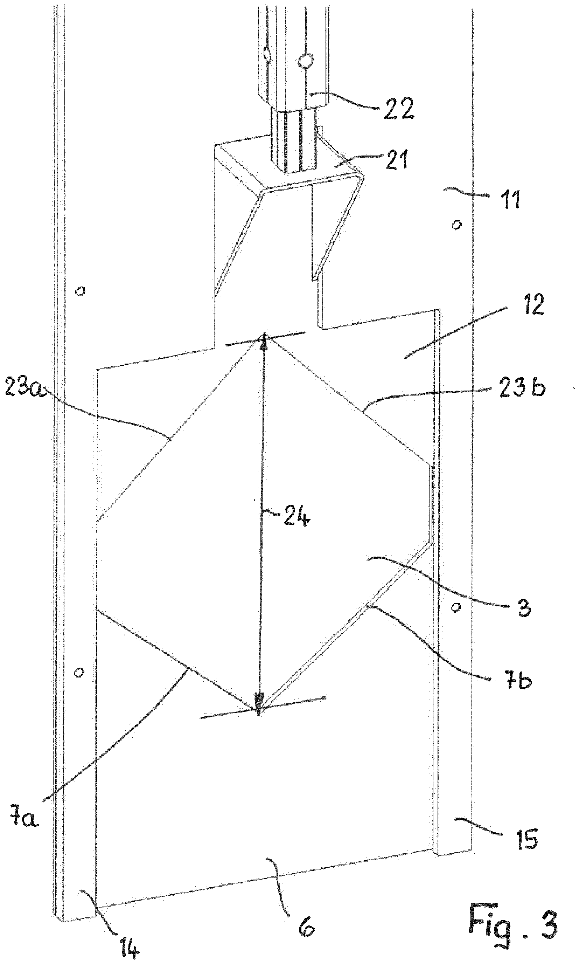

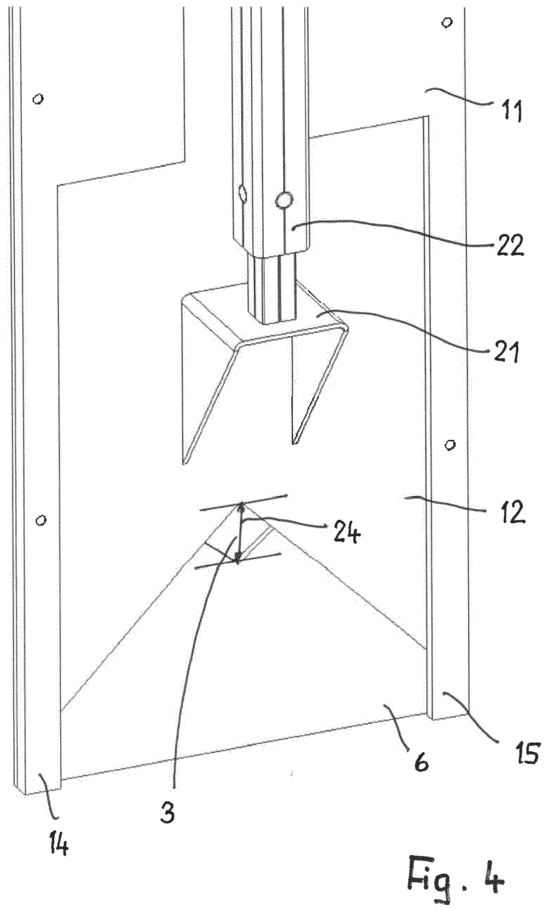

Mit dem Antrieb 18 lässt sich der Schieber 12 stufenlos verschieben. Wird die Antriebsstange 22 zurückgefahren, wird der Schieber 12, da er über die Lasche 21 mit der Antriebsstange 22 verbunden ist, in der Darstellung gemäß den Fig. 3 und 4 aufwärts bewegt.

Fig. 4 zeigt beispielhaft, dass der Schieber 12 um einen verhältnismäßig geringen Weg aus seiner Ausgangslage verschoben worden ist.

Ab einem vorgegebenen Verschiebeweg gibt der Schieber 12 die Auslassöffnung 3 teilweise frei.

Fig. 4 zeigt eine Stellung des Schiebers 12, bei der die Auslassöffnung 3 nur einen kleinen Öffnungsquerschnitt hat. Die Auslassöffnung wird durch die v-förmigen Ränder 7, 23 der Halteplatte 6 und des Schiebers 12 begrenzt. In Verschieberichtung des Schiebers 12 hat die Auslassöffnung 3 die Höhe 24.

Fig. 3 zeigt die Situation, wenn der Schieber 12 maximal aufwärts verschoben ist. In diesem Falle hat die Auslassöffnung 3 die maximale Höhe 24. In dieser Stellung des Schiebers 12 hat die Auslassöffnung 3 ihren größten Querschnitt. Begrenzt wird die Auslassöffnung 3 durch die Randabschnitte 7a, 7b der Halteplatte 6 und die Randabschnitte 23a, 23b des Schiebers 12.

Die Lasche 21 liegt in dieser maximalen Verschiebestellung des Schiebers 12 innerhalb des Ausschnittes 17 der Führungsplatte 11. Vorteilhaft liegt die Lasche 21 in dieser Stellung am oberen Rand des Ausschnittes 17 an, der dann als Anschlag für die Lasche 21 dient. Dadurch lässt sich der Schieber 12 einfach in die maximale Öffnungsstellung verschieben.

Da der Schieber 12 mit dem Antrieb 18 stufenlos verstellt werden kann, lässt sich der Öffnungsquerschnitt der Auslassöffnung 3 entsprechend stufenlos einstellen. Dadurch kann die Dosierrate sehr genau eingestellt werden.

Da die Halteplatte 6 fest am Dosierbehälter 1 befestigt ist, lässt sich der jeweils erforderliche Öffnungsquerschnitt der Auslassöffnung 3 durch den Verschiebeweg des Schiebers 12 einstellen. Der Verschiebeweg der Antriebsstange 22 kann durch Sensoren erfasst werden. Der jeweilige Verschiebeweg der Antriebsstange 22 und damit des Schiebers 12 bestimmt unmittelbar den Öffnungsquerschnitt der Auslassöffnung 3.

Der Schieber 12 lässt sich zuverlässig zwischen der Halteplatte 6 und der Führungsplatte 11 verschieben. Die Halteplatte 6 dient hierbei als Auflage für den Schieber 12, der dadurch zuverlässig verschoben werden kann.

Die Führungsplatte 11 wird so an der Halteplatte 6 befestigt, dass der Schieber 12 nahezu kein Spiel zwischen der Halteplatte 6 und der Führungsplatte 11 hat. Auf diese Weise lässt sich der Schieber 12 einwandfrei und mit hoher Genauigkeit in die gewünschte Position mit dem Antrieb 18 verstellen.

Die Führungsplatte 11 kann so ausgebildet sein, dass sie an ihrer der Halteplatte 6 zugewandten Innenseite in Verschieberichtung verlaufende Führungen aufweist, an denen der Schieber 12 mit seinen Längsrändern 19, 20 in Verschieberichtung geführt wird.

Da im Ausführungsbeispiel der Rand 7 und der Rand 23 jeweils v-förmig ausgebildet sind, hat die Auslassöffnung 3 bei jeder Querschnittsgröße entsprechenden eckigen Umriss, wie dies beispielhaft in den Fig. 3 und 4 dargestellt ist.

Aufgrund der besonderen Gestaltung der Ränder 7, 23 wird erreicht, dass sich der Auslassquerschnitt der Auslassöffnung 3 exakt einstellen lässt. Da die beiden Ränder 7, 23 spiegelsymmetrisch zur Längsachse der Halteplatte 6 bzw. der Führungsplatte 11 ausgebildet sind, befindet sich die Auslassöffnung 3 unabhängig von ihrer Querschnittsgröße stets mittig im Dosierorgan.

Dadurch kann das Material aus dem Dosierbehälter 1 stets störungsfrei durch die Auslassöffnung 3 austreten.

Der Antrieb 18 kann auf unterschiedliche Weise gestaltet sein. So kann der Antrieb eine schrittmotorgetriebene Spindel sein, wie das Ausführungsbeispiel zeigt. Als Antrieb kann auch ein Linearschlitten vorgesehen sein, der längs der Führungsplatte 11 verschoben wird, um den Schieber 12 in die unterschiedlichen Positionen zu verschieben.

Weiter besteht die Möglichkeit, als Antrieb einen Pneumatikantrieb zu verwenden.

Auch rein mechanische Lösungen in Form beispielsweise eines Kniehebels kommen in Betracht, mit dem der Schieber 12 in jede gewünschte Lage verschoben werden kann.

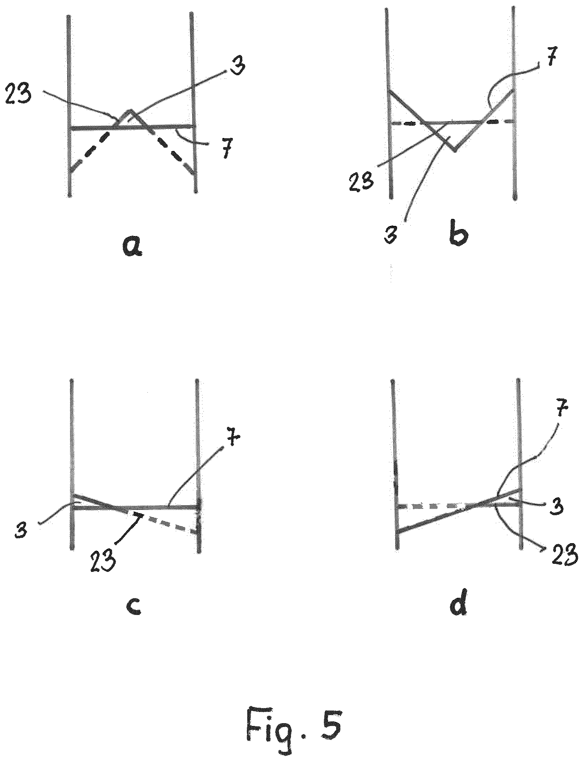

Fig. 5 zeigt unterschiedliche Gestaltungen der Ränder 7, 23 der Halteplatte 6 sowie des Schiebers 12. Anhand von Fig. 5 werden weitere Gestaltungen der Ränder 7, 23 beispielhaft erläutert. Der Einfachheit halber sind in Fig. 5 lediglich die Ränder 7, 23 dargestellt.

Fig. 5a zeigt die Möglichkeit, dass der Rand 7 der Halteplatte 6 gerade verläuft, während der Rand 23 des Schiebers 12 die beschriebene V-Form hat. Der Rand 7 der Halteplatte 6 verläuft in diesem Falle senkrecht zur Verschieberichtung des Schiebers 12.

Wie Fig. 5b zeigt, ist es auch möglich, dass lediglich der Rand 7 der Halteplatte 6 in der beschriebenen Weise V-förmig ausgebildet ist. Der Rand 23 des Schiebers 12 verläuft in diesem Falle gerade, und zwar senkrecht zur Verschieberichtung des Schiebers 12.

Fig. 5c zeigt die Möglichkeit, beide Ränder 7, 23 über ihre Länge gerade auszubilden. In diesem Falle erstreckt sich der gerade Rand 7 der Halteplatte 6 senkrecht zur Verschieberichtung des Schiebers 12, während der Rand 23 winklig zur Verschieberichtung des Schiebers 12 verläuft.

Die Ausführungsform gemäß Fig. 5d zeichnet sich dadurch aus, dass der Rand 23 des Schiebers 12 senkrecht zur Verschieberichtung des Schiebers verläuft, während der Rand 7 der Halteplatte 6 unter einem Winkel schräg zur Verschieberichtung des Schiebers 12 verläuft.

Grundsätzlich besteht die Möglichkeit, die Ränder 7, 23 bzw. auch die Randabschnitte 7a, 7b; 23a, 23b nicht gerade, sondern gekrümmt auszubilden.

Schließlich ist es möglich, dass bei den Ausführungsformen nach den Fig. 5c und 5d beide Ränder 7, 23 jeweils schräg zur Verschieberichtung des Schiebers 12 verlaufen.

Bei den in den Fig. 5a bis 5d dargestellten Ausführungsformen hat die Auslassöffnung 3 keinen rechteckigen, sondern einen dreieckigen Umriss.

Auch bei diesen Varianten gemäß Fig. 5 lässt sich der Querschnitt der Auslassöffnung 3 in Abhängigkeit vom Verschiebeweg des Schiebers 12 stufenlos feinfühlig einstellen.

Vorteilhaft ist es, wenn der Schieberantrieb 18 an eine Steuerung angeschlossen ist, mit der die Verschiebegeschwindigkeit des Schiebers 12 steuerbar ist. Dann können variable Öffnungsgeschwindigkeiten beim Verschieben des Schiebers 12 erreicht werden.

Damit die Position des Schiebers 12 zuverlässig und einfach ermittelt werden kann, kann vorteilhaft ein Wegmesssystem eingesetzt werden, mit dem der Verschiebeweg des Schiebers 12 direkt oder indirekt erfasst wird. Das Wegmesssystem kann beispielhaft durch Wegmesssensoren gebildet sein, welche die jeweilige Position des Schieber 12 erfassen und entsprechende Signale an die Steuerung senden. Mit Hilfe dieser Messsignale kann die Steuerung den Antrieb 18 so steuern, dass der Schieber 12 in die exakte Position mit möglichst optimaler Geschwindigkeit verstellt wird.

Grundsätzlich ist es auch möglich, die Position des Schiebers 12 indirekt durch das Wegmesssystem zu erfassen. So kann beispielsweise der Drehweg einer Spindel erfasst werden, aus dem dann die Verschiebeposition des Schiebers 12 bestimmt werden kann. Diese Bestimmung erfolgt in der Steuerung, welche die entsprechenden Wegmesssignale erhält.

Um eine maximale Dosiergenauigkeit zu erhalten, ist die Steuerung so ausgebildet, dass sie Standardabweichungen der Dosierkonstanz auswertet und berechnet. Anhand dieser Berechnung kann die Steuerung unter Berücksichtigung des Schüttgutstromes, des Auslassquerschnittes der Auslassöffnung 3 und der Dosierzeit die optimale Schieberposition ermitteln.

Die Steuerung kann intelligent ausgebildet sein und Algorithmen zur Selbstadaption und -optimierung des Dosierprozesses mit unterschiedlichen Schüttgütern enthalten.

Besonders vorteilhaft ist es in diesem Zusammenhang, wenn in der Steuerung Fließeigenschaften des jeweiligen Schüttgutes gespeichert werden. Dann kann bei der Einstellung des Schiebers 12 die Steuerung auch die ermittelten und gespeicherten Fließeigenschaften des jeweiligen Schüttgutes berücksichtigen. Insbesondere kann auf diese Weise auch die schüttgutspezifische Dosierrate automatisch ermittelt werden.

Mit Hilfe der Steuerung ist es somit möglich, den idealen Auslassquerschnitt zu berechnen, bezogen auf die maximale Dosiergenauigkeit und eine minimale Dosierzeit.

Abweichend vom dargestellten Ausführungsbeispiel kann das Führungselement 11 direkt an der Behälterwand 5 befestigt sein. Eine Halteplatte kann in diesem Fall entfallen. Je nach Gestaltung des Führungselementes 11 kann der Antrieb 18 dann an der Behälterwand 5 befestigt sein. Sie weist einen abstehenden Träger auf, auf dem der Antrieb 18 befestigt ist. Das Führungselement 11 befindet sich im Bereich zwischen dem Träger und der Auslassöffnung 3. Das Führungselement 11 kann hierbei beispielsweise blockförmig so gestaltet sein, dass es den Schieber 12 zuverlässig führen kann.

## Patentansprüche

1. Dosiereinrichtung für Schüttgüter, mit wenigstens einem Dosierbehälter, der mit wenigstens einer Auslassöffnung versehen ist, die durch einen Schieber verschließbar ist, der mit einem Schieberantrieb verbunden ist,
**dadurch gekennzeichnet, dass** die Auslassöffnung (3) und/oder der Schieber (12) einen schräg zur Verschieberichtung des Schiebers (12) verlaufenden Rand (7, 23) aufweisen, und dass die Ränder (7, 23) der Auslassöffnung (3) und des Schiebers (12) in Abhängigkeit vom Verschiebeweg des Schiebers (23) den wegabhängigen Auslassquerschnitt der Auslassöffnung (3) bestimmen.

2. Dosiereinrichtung nach Anspruch 1,
**dadurch gekennzeichnet, dass** der Rand (7) der Auslassöffnung (3) v-förmig ausgebildet ist.

3. Dosiereinrichtung nach Anspruch 1 oder 2,
**dadurch gekennzeichnet, dass** der Rand (23) des Schiebers (12) v-förmig ausgebildet ist.

4. Dosiereinrichtung nach einem der Ansprüche 1 bis 3,
**dadurch gekennzeichnet, dass** der Rand (23) des Schiebers (12) spiegelsymmetrisch zum Rand (7) der Auslassöffnung (3) ausgebildet ist.

5. Dosiereinrichtung nach einem der Ansprüche 1 bis 4,
**dadurch gekennzeichnet, dass** die Auslassöffnung (3) an einer Behälterwand (5) und/oder an einer Halteplatte (6) vorgesehen ist, die am Dosierbehälter (1) befestigt ist.

6. Dosiereinrichtung nach Anspruch 5,
**dadurch gekennzeichnet, dass** der Schieber (12) an der Behälterwand (5) oder an der Halteplatte (6) anliegend verschiebbar ist.

7. Dosiereinrichtung nach einem der Ansprüche 1 bis 6,
**dadurch gekennzeichnet, dass** der Schieber (12) durch wenigstens ein Führungselement (11), vorzugsweise eine Führungsplatte, bei seiner Verschiebebewegung geführt ist.

8. Dosiereinrichtung nach Anspruch 7,
**dadurch gekennzeichnet, dass** das Führungselement (11) an der Behälterwand (5) oder an der Halteplatte (6) befestigt ist.

9. Dosiereinrichtung nach Anspruch 7 oder 8,
**dadurch gekennzeichnet, dass** am Führungselement (11) oder an der Behälterwand (5) der Schieberantrieb (18) gelagert ist.

10. Dosiereinrichtung nach einem der Ansprüche 1 bis 9,
**dadurch gekennzeichnet, dass** der Schieber (12) wenigstens ein von ihm abstehendes Anschlussteil (21) aufweist, mit dem der Schieber (12) mit dem Schieberantrieb (18) antriebsverbunden ist.

11. Dosiereinrichtung nach einem der Ansprüche 1 bis 10,
**dadurch gekennzeichnet, dass** der den jeweiligen Auslassquerschnitt der Auslassöffnung (3) begrenzende Rand (23) der untere Rand des Schiebers (12) ist.

12. Dosiereinrichtung nach einem der Ansprüche 1 bis 11,
**dadurch gekennzeichnet, dass** der Schieberantrieb (18) an eine Steuerung angeschlossen ist, mit der die Verschiebegeschwindigkeit des Schiebers (12) steuerbar ist.

13. Dosiereinrichtung nach Anspruch 12,
**dadurch gekennzeichnet, dass** ein Wegmesssystem den Verschiebeweg des Schiebers (12) erfasst, das an die Steuerung angeschlossen ist.

14. Dosiereinrichtung nach Anspruch 13,
**dadurch gekennzeichnet, dass** das Wegmesssystem den Verschiebeweg des Schiebers (12) direkt erfasst.

15. Dosiereinrichtung nach Anspruch 13,
**dadurch gekennzeichnet, dass** das Wegmesssystem den Verschiebeweg des Schiebers (12) indirekt durch Erfassung von Daten des Schieberantriebes (18) erfasst.

16. Dosiereinrichtung nach einem der Ansprüche 12 bis 15,
**dadurch gekennzeichnet, dass** die Steuerung Standardabweichungen der Dosierkonstanz auswertet und berechnet und anhand der Berechnung unter Berücksichtigung von Schüttgutstrom, Auslassquerschnitt der Auslassöffnung (3) und Dosierzeit die optimale Position des Schiebers (12) ermittelt.

17. Dosiereinrichtung nach einem der Ansprüche 12 bis 16,
**dadurch gekennzeichnet, dass** in der Steuerung Fließeigenschaften des Schüttgutes gespeichert sind.
